# EUROPEAN PATENT SPECIFICATION

(11) **EP 4 620 765 B1**
(45) Date of publication and mention of the grant of the patent: **13.05.2026**
(21) Application number: 24305417.8
(22) Date of filing: 20.03.2024
(51) Int. Cl.: B60W 40/09, B60W 40/13, B60W 50/00

(54) **METHOD AND APPARATUS FOR AUTOMATICALLY GENERATING A SPEED PROFILE OF A VEHICLE**
VERFAHREN UND VORRICHTUNG ZUR AUTOMATISCHEN ERZEUGUNG EINES GESCHWINDIGKEITSPROFILS EINES FAHRZEUGS
PROCÉDÉ ET DISPOSITIF POUR GÉNÉRER AUTOMATIQUEMENT UN PROFIL DE VITESSE D'UN VÉHICULE

(43) Date of publication of application: 24.09.2025
(73) Proprietor: TOYOTA JIDOSHA KABUSHIKI KAISHA, Aichi-ken 471-8571 (JP)
(72) Inventor: BERNES-LASSERRE, Thomas, 1140 Brussels (BE); PAPADOMICHELAKIS, Georgios, 1140 Brussels (BE); DE SMET, Jeroen, 1140 Brussels (BE)
(74) Representative: Cabinet Beau de Loménie

(56) References cited:
- WO-A1-2013/087536
- US-A1- 2020 172 081

## Description

### 1. Field of the invention

The present disclosure relates to the field of vehicle control systems and, more particularly, to a computer-implemented method for automatically generating a speed profile of a vehicle to be driven on a predetermined path.

### 2. Description of Related Art

Document US 2020/172081 A1 relates to a control device of a vehicle.

The automation of vehicles represents a major challenge for automotive safety and driving optimization. In an effort to eliminate human error while driving a vehicle, Advanced Driver Assistance Systems (ADAS), also known as "driver assistance systems" have been designed to guide the driver and assist him in risk anticipation by automating, improving, or adapting some or all of the tasks related to driving a vehicle.

These driver assistance systems rely generally on sensors to assist the driver throughout his journey and often communicate with a server to receive real-time information along the vehicle's route. Modem assistance driver systems also provide additional information related to the route, such as weather conditions, traffic congestion, duration, and disruptions on the road (diversions or lane closures, for example). The driver assistance systems can also be configured to provide information, including regulatory indications, such as speed limits or the presence of checkpoints.

By analysing speed variations, the driver assistance system can provide more targeted assistance. For instance, if a driver frequently accelerates aggressively, adaptive cruise control systems can adjust the speed to maintain safer following distances or suggest driving behaviour modifications. Further, by continuously monitoring the speed of the vehicle, the driver assistance system can detect sudden deviations that might indicate driver fatigue, prompting the system to intervene or alert the driver. Also, excessive speed changes, abrupt accelerations, or frequent and sudden decelerations may indicate erratic or unsafe driving habits. Identifying such patterns allows for interventions or alerts to promote safer driving practices, reducing the risk of accidents.

These speed variations form "a speed profile" of the driver which refers to a depiction of the vehicle's speed variations over a specific duration or along a particular path. It typically includes information on how the vehicle's speed changes over time, encompassing acceleration, deceleration, and constant speed phases. This profile could be represented graphically, showcasing speed fluctuations at different points during a journey or specific driving periods.

Generating a driver's speed profile is useful for various other applications as well. For example, the speed profile also significantly influences fuel consumption and emissions. Monitoring speed variations helps in optimizing driving habits for improved fuel efficiency. Consistent speeds and smooth accelerations/decelerations can contribute to reduced fuel consumption and environmental impact by minimizing unnecessary energy expenditure.

Further, as extreme variations in speed can impact a vehicle's components and overall performances, identifying patterns in a driver's speed profile aids in understanding how driving, habits affect the vehicle's wear and tear. This information can contribute to more effective maintenance schedules and the longevity of vehicle components. In addition, fluctuations in vehicle speed have also an impact on energy consumption as frequent accelerations and decelerations increase mechanical losses in the drivetrain of the vehicle leading to higher energy usage. Thus, it is advantageous to determine the vehicle's energy consumption based on the generated speed profile to serve as an indicator of the vehicle's performance efficiency.

The generation of a driver's speed profile is based on a modular framework but lacks a defined procedure for calibrating the model based on actual driving data that takes into account driver intentions. It only relies on a physical vehicle model which encompasses equations and principles governing vehicle dynamics, such as physic-based laws of motion, aerodynamics, and friction.

However, without considering actual driving behaviours and intentions of the driver, the generated speed profiles do not accurately reflect real-world scenarios which lead to unrealistic or impractical outcomes. Understanding how drivers typically behave on specific routes or in certain conditions is crucial for creating speed profiles that align with expected real-world behaviours.

An alternative approach would be the generation of the driver speed profile by using machine learning techniques, particularly classification or regression algorithms. These algorithms analyse and categorize road conditions based on recorded driving scenes by training on datasets that pair road conditions (e.g., curves, traffic density, weather) with corresponding driving behaviours.

However, using machine learning techniques to train a model in order to generate a speed profile of the driver poses a challenge for vehicle manufacturers, as it demands substantial computational resources that necessitate an advanced computing infrastructure. This results in escalated costs related to the acquisition and upkeep of high-performance hardware and systems. Additionally, the complexity and resource-intensive nature of the computational processes involved may lead to extended development timelines, potentially delaying the integration of these technologies into vehicles.

Accordingly, the existing solutions fall short in determining a driver's speed profile in a simple, efficient and precise manner.

### SUMMARY

The object of the present invention is to at least substantially remedy the above-mentioned drawbacks. In this respect, the present disclosure relates to a computer-implemented method for automatically generating a speed profile of a vehicle to be driven on a predetermined path, the method comprising the following steps:
- collecting a first set of data representative of environmental conditions at waypoints along the predetermined path, each distinct environmental condition being associated with alternative speed fluctuation values and each alternative speed fluctuation value being associated with a probability value;
- collecting a second set of data representative of at least one vehicle attribute;
- adjusting said alternative speed fluctuation values based on the at least one vehicle attribute;
- selecting for each waypoint an adjusted speed fluctuation value among the associated alternative speed fluctuation values according to the associated probability values;
- generating the speed profile of the vehicle according to the selected speed fluctuation values and their waypoints; and
- determining the vehicle's energy consumption along the predetermined path based on the generated speed profile of the vehicle.

For conciseness, the method is referred to hereinafter as the generation method. Further, as used herein, for conciseness and unless the context indicates otherwise, "a", "an", and "the" are intended to refer to "at least one" or "each" and to include plural forms as well. Conversely, generic plural forms include the singular. Further, the "at least one vehicle attribute" comprises one vehicle attribute or a plurality of vehicle attributes.

The aim of the invention is to statistically analyse data such as how vehicle attributes and environmental conditions impact the speed of the vehicle. Statistical analysis provide more transparent and interpretable results. The factors influencing the speed of the vehicle are explicitly defined. Statistical models are simpler to implement and to understand compared to complex machine learning algorithms. Also, statistical models do not require training a model that requires intensive computational power and resources for manufacturers. In addition, statistical analysis performs well with smaller datasets thus ensuring mode reliable predictions without extensive data requirements.

Accordingly, with this statistical approach, each distinct environmental condition becomes associated with alternative speed values. In particular, multiple speed values can occur for the same environmental condition as it involves statistical data. In fact, due to the diversity of driving scenarios, the environmental condition might not correlate with a single speed value.

Each environmental condition serves as a waypoint on the predetermined path. Since multiple speed values are linked to each environmental condition, the selection of a specific speed value from these alternatives is needed to map the speed profile on the predetermined path.

Before selecting such a speed value at each waypoint, it is advantageous to adjust these alternative speed values based on at least one attribute of the vehicle. In particular, the vehicle attribute, such as weight, influences its speed. Taking into account such attribute into the speed profile generation ensures a more accurate representation of how the vehicle would behave when encountering a specific environmental condition. It is these adjusted alternative speed fluctuation values based on the attribute that will be considered when selecting for each waypoint a speed fluctuation value.

Once the alternative speed fluctuation values adjusted, the selection of the speed fluctuation value among the associated alternative speed fluctuation values is performed according to the associated probability values that have been determined based on the acquired first set of data. In other words, a probability value represents the likelihood of a particular speed variation occurring when the vehicle encounters a specific environmental condition at a waypoint of the predetermined path.

Accordingly, once a fluctuation value for each waypoint is selected, it will be then possible to generate the speed profile of the vehicle to be driven on the predetermined path.

Optionally, each speed fluctuation value of a speed profile is also selected according to a driver profile.

A driver profile refers to the driving characteristics of a specific driver. These profiles capture distinct driving behaviours or tendencies based on various factors such as speed, acceleration, braking, turning habits and responsiveness to road conditions, etc.

Different driver profiles exist, such as aggressive, cautious, or inattentive profiles. For instance, aggressive drivers often drive faster, accelerate and decelerate frequently, while cautious drivers tend to maintain slower speeds. As these driver profiles can influence speed fluctuations in specific environmental conditions, selecting a speed fluctuation value based on the driver profile is advantageous.

Optionally, the driver profile is selected from among a plurality of alternative driver profiles, wherein each alternative driver profile is associated to a distinct range of speed fluctuation values (or "acceleration").

Optionally, the distinct ranges of speed fluctuation values are selected according to a statistical distribution of speed fluctuation values.

Optionally, the statistical distribution of speed fluctuation values is calculated from prior statistical study of driving records.

A statistical distribution is a mathematical concept that aims to organize and categorize speed values fluctuations based on statistical data (real driving data records relating to vehicles that have similar characteristics of the present vehicle). It helps in determining the most common or typical speed fluctuation values within a central range, with fewer occurrences of extreme speed fluctuations at the ends of the distribution.

In particular, the statistical distribution varies for each pair of current speed and target speed of the vehicle. The mapping of this statistical distribution thus depicts the driver's behaviour.

(deleted).

Fluctuations in vehicle speed have an impact on energy consumption. For instance, accelerating and decelerating frequently increase mechanical losses in the drivetrain of the vehicle, leading to higher energy usage. Thus, it is advantageous to determine the vehicle's energy consumption based on the generated speed profile for example to serve as an indicator of the vehicle's performance efficiency.

Optionally, the at least one vehicle attribute comprises weight of the vehicle and/or the type of the vehicle.

In fact, heavier vehicles typically have greater inertia, meaning that they require more force to accelerate or decelerate compared to lighter vehicles. As a result, changes in speed will be slower (lower acceleration) resulting in a smoother speed profile.

Optionally, the environmental condition comprises traffic condition and/or geometry condition of the path to be travelled by the vehicle.

Geometry condition refers to the physical characteristics of the road to be travelled by the vehicle on the predetermined path, including its shape and alignment for example, while traffic condition refers to the situation of traffic at a specific waypoint (location).

Optionally, the traffic condition comprises traffic light and/or an accident and/or traffic signs.

Optionally, the speed fluctuations values due to geometry condition are calculated according to regression models.

The present disclosure further relates to a computer program set including instructions for executing the steps of the above-described computer-implemented method when said program set is executed by one computer.

This program set can use any programming language and take the form of source code, object code, or a code intermediate between source code and object code, such as a partially compiled form or any other desirable form.

The present disclosure further relates to an apparatus for automatically generating a speed profile of a vehicle to be driven on a predetermined path, the apparatus comprising:
- a first collecting module configured to collect a first set of data representative of environmental conditions at waypoints along the predetermined path, each distinct environmental condition being associated with alternative speed fluctuation values and each alternative speed fluctuation value being associated with a probability value;
- a second collecting module configured to collect a second set of data representative of at least one vehicle attribute;
- an adjusting module configured to adjust said alternative speed fluctuation values based on the at least one vehicle attribute;
- a selecting module configured to select for each waypoint an adjusted speed fluctuation value among the associated alternative speed fluctuation values according to the associated probability values; and
- a generating module configured to generate the speed profile of the vehicle according to the selected speed fluctuation values and their waypoints,
and the apparatus determines the vehicle's energy consumption along the predetermined path based on the generated speed profile of the vehicle.

Optionally, at least one of said modules is located on a cloud.

It should be noted that the "at least one of said modules" comprises one module of the generation apparatus or a plurality of modules of the generation apparatus.

A cloud typically refers to a network of remote servers accessed over the internet to store, manage and process data rather than on a local server or personal computer. Accordingly, one specific module or a plurality of modules of the generation apparatus is hosted or operated within the cloud rather than residing on a local server. It means that the functions or operation of the or these module(s) are carried out using cloud-based resources or services.

The present disclosure also relates to a vehicle comprising an apparatus for automatically generating a speed profile as described above.

The term "vehicle" may be directed to an apparatus capable of transporting people from one location to another, such as a car or a motorcycle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a block diagram of a generation apparatus according to an embodiment of the present disclosure; and
- Fig. 2 is a flowchart of a generation method according to an embodiment of the present disclosure.

### DETAILED DESCRIPTION OF EMBODIMENTS

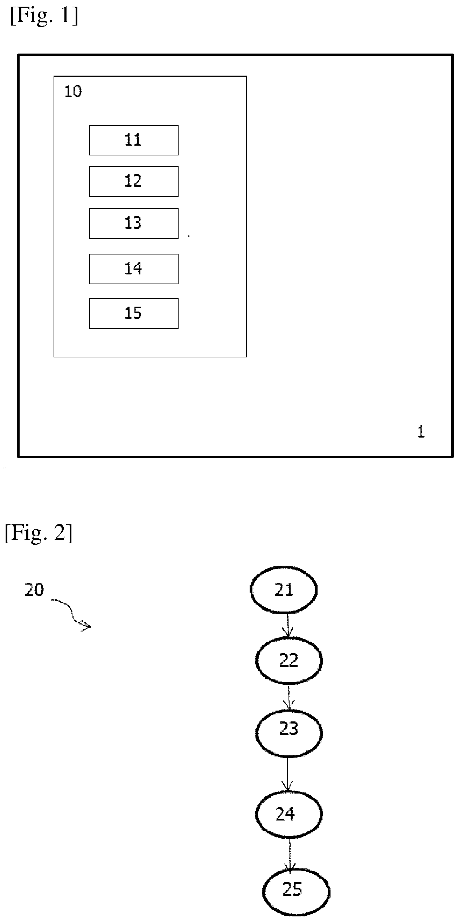

Figure 1 shows a block diagram of a generation apparatus 10 comprising a first collecting module 11, a second collecting module 12, an adjusting module 13, a selecting module 14, and a generating module 15 according to embodiments of the present disclosure. The generation apparatus 10 may be located inside or outside a vehicle 1 which may be, without limitation, an autonomous or semi-autonomous vehicle. Such vehicle 1 may be directed to an apparatus capable of transporting people from one location to another, such as a car or a motorcycle, and may be categorized into different levels based on the extent of automation and human involvement in the driving tasks.

Alternatively or additionally, one module or a plurality of modules among the modules of the generation apparatus 10 may be hosted or operated within a cloud (extern server) rather than residing on a local server.

The generation apparatus 10 may be configured to automatically generating a speed profile of the vehicle 1 to be driven on a predetermined path or predetermined route that the vehicle 1 is intended to follow. The speed profile of the vehicle 1 will thus be generated according to the characteristics of such predetermined path, i.e. before travelling on it.

A sequence of environmental conditions occurs throughout the predetermined path. Each environmental condition forms then a specific waypoint along the predetermined path.

For instance, an environmental condition comprises traffic condition and/or geometry condition of the predetermined path to be travelled by the vehicle 1.

The environmental conditions encountered along the predetermined path by the vehicle 1 influence its speed, leading to speed fluctuations. For instance, changes in terrain topography like tight curves may require speed adaptation to maintain stability and safety. Similarly, weather conditions such as strong winds, heavy rain or snow can affect traction, friction and visibility, prompting speed adjustments to ensure the vehicle operates effectively in these scenarios.

As another example, the traffic condition comprises traffic light and/or an accident and/or traffic signs which also affect the vehicle speed. The presence of an accident on the path to be travelled by the vehicle 1 can lead to slowdowns. The driver thus reduces the speed of the vehicle or comes to a complete stop.

Regarding traffic signs, they may impose speed limits or mandatory lane changes. These directives require speed adjustments to comply with traffic regulations, impacting the vehicle's speed along the predetermined path.

Thus, it is important to consider these environmental conditions to generate an accurate speed profile of the vehicle 1 on the predetermined path.

The generation apparatus 10 may comprise an electronic circuit, a processor (shared, dedicated, or group), a combinational logic circuit, a memory that executes one or more software programs, and/or other suitable components that provide the described functionality. In other words, the generation apparatus 10 may be a computer device. The generation apparatus 10 may be connected to a memory, which may store data, e.g. at least one computer program, which, when executed, carries out the collision detection method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk.

Alternatively, the memory can be an integrated circuit in which the program is incorporated, the circuit being adapted to execute the driver assistance method or to be used in its execution.

The first collecting module 11 is a module configured to collect a first set of data representative of environmental conditions at waypoints along the predetermined path.

Each distinct environmental condition is associated with alternative speed fluctuations values. In other words, each environmental condition leads to particular speed fluctuations. For instance, if the environmental condition at a specific waypoint of the predetermined path is a slow-down traffic sign, statistical distribution show that, above a certain speed, the driver performs a deceleration that can be set between several specific values, each value being associated with a probability value.

The first collecting module 11 may be implemented as software running on the generation apparatus 10 or may be implemented partially or fully as a hardware element of the generation apparatus 10.

The second collecting module 12 is a module configured to collect a second set of data representative of at least one vehicle attribute.

The second collecting module 12 may be implemented as software running on the generation apparatus 10 or may be implemented partially or fully as a hardware element of the generation apparatus 10.

In particular, the generation apparatus 10 may comprise a program that includes both the first collecting module 11 and the second collecting module 12. Alternatively, the first collecting module 11 may be realized as an independent program (in particular, beside a program forming the second collecting module 12).

Before selecting such a speed fluctuation value at each waypoint among the alternative speed fluctuations values identified by a statistical approach, it is advantageous to adjust these alternative speed values based on at least one attribute of the vehicle 1.

In particular, the vehicle attribute, such as weight, influences its speed as for example heavier vehicles typically require more energy to arrive at a specific speed value. Taking into account such attribute into the speed profile generation ensures a more accurate representation of how the vehicle 1 would behave when encountering a specific environmental condition.

Accordingly, the adjusting module 13 is a module for adjusting said alternative speed fluctuation values based on the at least one vehicle attribute.

The adjusting module 13 may be implemented as software running on the generation apparatus 10 and may also be implemented partially or fully on the generation apparatus 10 as a hardware element of the generation apparatus 10.

In particular, the adjusting module 13 may comprise a program that includes together the first collecting module 11 and the second collecting module 12. Alternatively, the adjusting module 13 may be realized as an independent program (in particular, beside a program forming both the first collecting module 11 and the second collecting module 12, or beside a program forming the second collecting module 12 and beside a program forming the first collecting module 11).

The selecting module 14 is a module configured to select for each waypoint a speed fluctuation value among the associated alternative speed fluctuation values according to the associated probability values.

For instance, when encountering an environmental condition such as a railway crossing, the probability for the driver to slow down by approximately 28% is 22%, and the probability to stop to stop is 3%. Accordingly, if the same environmental condition (e.g. railway crossing) is present at multiple waypoints of the predetermined path, the selecting module 14 is configured to assign stop events and slow-down events to the number of waypoints matching the probabilities to stop and slow down.

The selecting module 14 may be implemented as software running on the generation apparatus 10 or may be implemented partially or fully as a hardware element of the generation apparatus 10. In particular, the generation apparatus 10 may comprise a program which includes together the first collecting module 11, the second collecting module 12 and the adjusting module 13. Alternatively, the selecting module 14 may be realized as independent program (in particular beside a program forming together the first collecting module 11, the second collecting module 12, and the adjusting module 13, or beside a program forming the adjusting module 12, beside a program forming the first collecting module 11 and beside a program forming the adjusting module 13).

The generating module 15 is a module configured to generate the speed profile of the vehicle 1 to the selected speed fluctuation values and their waypoints.

The speed profile of the vehicle 1 can be generated in various well-known formats. For instance, the speed profile can be represented as a graphical or a numerical dataset that illustrates the driver's speed behaviour along a predefined route.

The generating module 15 may be implemented as software running on the generation apparatus 10 or may be implemented partially or fully as a hardware element of the generation apparatus 10. In particular, the generation apparatus 10 may comprise a program which includes together the first collecting module 11, the second collecting module 12, the adjusting module 13 and the selecting module 14. Alternatively, the generating module 14 may be realized as independent program (in particular beside a program forming together the first collecting module 11, the second collecting module 12, the adjusting module 13 and the selecting module 14, or beside a program forming the second collecting module 12, beside a program forming the first collecting module 11, beside a program forming the adjusting module 13, or beside a program forming the selecting module 14).

The tasks carried out by the generation apparatus 10 are detailed hereinafter with respect to the corresponding generation method, an embodiment of which is illustrated in Fig. 2.

Figure 2 is a flowchart of the generation method 20 according to an embodiment of the present disclosure. The generation method 20 is performed for automatically generating a speed profile of the vehicle 1 to be driven on the predetermined path as the speed profile can be a valuable data to identify for example the impact on energy consumption.

To this end, the generation method 20 comprises a step 21 performed by the first collecting module 11 to collect the first set of data representative of environmental conditions at said waypoints along the predetermined path, noting that each distinct environmental condition is associated with alternative speed fluctuation values and that each alternative speed fluctuation value is associated with a probability value as described above.

That is, the generation method 20 further comprises a step 22 performed by the second collecting module 12 to collect the second set of data representative of at least one vehicle 1 attribute.

The generation method 20 further comprises a step 23 performed by the adjusting module 13 to adjust said alternative speed fluctuation values based on the at least one vehicle attribute.

Then, the generation method 20 further comprises a step 24 performed by the selecting module 14 to select for each waypoint a speed fluctuation value among the associated alternative speed fluctuation values according to the associated probability values as described above.

The step 24 optionally further comprises a sub-step of selecting each speed fluctuation value according to the driver profile.

Finally, the generation method 20 further comprises a step 25 performed by the generating module 15 to generate the speed profile of the vehicle 1 according to the selected fluctuations values and their waypoints.

The step 25 optionally further comprises a sub-step of determining the vehicle's energy consumption along the predetermined path based on the generated speed profile of the vehicle.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense. It should also be noted that generating a speed profile in ADAS systems is only an example of application and thus cannot be limited to this purpose. The generation of a speed profile can be performed for a variety of other applications in which a person skilled in the art finds it useful to implement the invention.

## Claims

1. A computer-implemented method (20) for automatically generating a speed profile of a vehicle (1) to be driven on a predetermined path, the method comprising the following steps:
- collecting a first set of data representative of environmental conditions at waypoints along the predetermined path (21), each distinct environmental condition being associated with alternative speed fluctuation values and each alternative speed fluctuation value being associated with a probability value;
- collecting a second set of data representative of at least one vehicle attribute (22);
- adjusting said alternative speed fluctuation values based on the at least one vehicle attribute (23);
the computer-implemented method being **characterized in that** it comprises:
- selecting for each waypoint an adjusted speed fluctuation value among the associated alternative speed fluctuation values according to the associated probability values (24);
- generating the speed profile of the vehicle according to the selected speed fluctuation values and their waypoints (25); and
- determining the vehicle's energy consumption along the predetermined path based on the generated speed profile of the vehicle.

2. The computer-implemented method according to claim 1, wherein each speed fluctuation value of a speed profile to be generated is also selected according to a driver profile.

3. The computer-implemented method according to claim 2, wherein the driver profile is selected from among a plurality of alternative driver profiles, wherein each alternative driver profile is associated to a distinct range of speed fluctuation values.

4. The computer-implemented method according to claim 3, wherein the distinct ranges of speed fluctuation values are selected according to a statistical distribution of speed fluctuation values.

5. The computer-implemented method according to claim 4, wherein the statistical distribution of speed fluctuation values is calculated from prior statistical study of driving records.

6. The computer-implemented method according to any one of claims 1 to 5, wherein the at least one vehicle attribute comprises weight of the vehicle and/or the type of the vehicle.

7. The computer-implemented method according to any one of claims 1 to 5, wherein the environmental condition comprises traffic condition and/or geometry condition of the path to be travelled by the vehicle.

8. The computer-implemented method according to claim 6, wherein the traffic condition comprises traffic light and/or an accident and/or traffic signs.

9. The computer-implemented method according to claim 7 or 8, wherein the speed fluctuations values due to geometry condition are calculated according to regression models.

10. A computer program set including instructions for executing the steps of the method of any one of claims 1 to 9 when said program set is executed by at least one computer.

11. An apparatus (10) for automatically generating a speed profile of a vehicle (1) to be driven on a predetermined path, the apparatus (10) comprising:
- a first collecting module (11) configured to collect a first set of data representative of environmental conditions at waypoints along the predetermined path, each distinct environmental condition being associated with alternative speed fluctuation values and each alternative speed fluctuation value being associated with a probability value;
- a second collecting module (12) configured to collect a second set of data representative of at least one vehicle attribute;
- an adjusting module (13) configured to adjust said alternative speed fluctuation values based on the at least one vehicle attribute;
the apparatus (10) being **characterized in that** it comprises:
- a selecting module (14) configured to select for each waypoint an adjusted speed fluctuation value among the associated alternative speed fluctuation values according to the associated probability values; and
- a generating module (15) configured to generate the speed profile of the vehicle according to the selected speed fluctuation values and their waypoints, and
the apparatus determines the vehicle's energy consumption along the predetermined path based on the generated speed profile of the vehicle.

12. The apparatus (10) according to claim 11, wherein at least one of said modules is located on a cloud.

13. A vehicle (1) comprising an apparatus (10) according to claim 12.

## Patentansprüche

1. Computerimplementiertes Verfahren (20) zum automatischen Generieren eines Geschwindigkeitsprofils eines Fahrzeugs (1), das auf einem zuvor festgelegten Pfad gefahren werden soll, wobei das Verfahren die folgenden Schritte umfasst:
- Erfassen eines ersten Satzes von Daten, die für Umgebungsbedingungen an Wegpunkten entlang des zuvor festgelegten Pfades (21) repräsentativ sind, wobei jede einzelne Umgebungsbedingung mit alternativen Geschwindigkeitsschwankungswerten verknüpft ist und jeder alternative Geschwindigkeitsschwankungswert mit einem Wahrscheinlichkeitswert verknüpft ist;
- Erfassen eines zweiten Satzes von Daten, die für mindestens ein Fahrzeugattribut (22) repräsentativ sind;
- Justieren der alternativen Geschwindigkeitsschwankungswerte auf der Grundlage des mindestens einen Fahrzeugattributs (23);
wobei das computerimplementierte Verfahren **dadurch gekennzeichnet ist, dass** es umfasst:
- Auswählen, für jeden Wegpunkt, eines justierten Geschwindigkeitsschwankungswertes aus den verknüpften alternativen Geschwindigkeitsschwankungswerten entsprechend den verknüpften Wahrscheinlichkeitswerten (24);
- Generieren des Geschwindigkeitsprofils des Fahrzeugs gemäß den ausgewählten Geschwindigkeitsschwankungswerten und ihren Wegpunkten (25); und
- Bestimmen des Energieverbrauchs des Fahrzeugs entlang des zuvor festgelegten Pfades auf der Grundlage des generierten Geschwindigkeitsprofils des Fahrzeugs.

2. Computerimplementiertes Verfahren nach Anspruch 1, wobei jeder Geschwindigkeitsschwankungswert eines zu generierenden Geschwindigkeitsprofils auch gemäß einem Fahrerprofil ausgewählt wird.

3. Computerimplementiertes Verfahren nach Anspruch 2, wobei das Fahrerprofil aus mehreren alternativen Fahrerprofilen ausgewählt wird, wobei jedes alternative Fahrerprofil mit einem speziellen Bereich von Geschwindigkeitsschwankungswerten verknüpft ist.

4. Computerimplementiertes Verfahren nach Anspruch 3, wobei die speziellen Bereiche von Geschwindigkeitsschwankungswerten gemäß einer statistischen Verteilung von Geschwindigkeitsschwankungswerten ausgewählt werden.

5. Computerimplementiertes Verfahren nach Anspruch 4, wobei die statistische Verteilung von Geschwindigkeitsschwankungswerten aus einer früheren statistischen Studie von Fahrdaten berechnet wird.

6. Computerimplementiertes Verfahren nach einem der Ansprüche 1 bis 5, wobei das mindestens eine Fahrzeugattribut das Gewicht des Fahrzeugs und/oder den Typ des Fahrzeugs umfasst.

7. Computerimplementiertes Verfahren nach einem der Ansprüche 1 bis 5, wobei die Umgebungsbedingung eine Verkehrsbedingung und/oder eine Geometriebedingung des durch das Fahrzeug zu fahrenden Pfades umfasst.

8. Computerimplementiertes Verfahren nach Anspruch 6, wobei die Verkehrsbedingung eine Ampel und/oder einen Unfall und/oder Verkehrszeichen umfasst.

9. Computerimplementiertes Verfahren nach Anspruch 7 oder 8, wobei die Geschwindigkeitsschwankungswerte aufgrund einer Geometriebedingung gemäß Regressionsmodellen berechnet werden.

10. Computerprogrammsatz, der Instruktionen enthält, um die Schritte des Verfahrens nach einem der Ansprüche 1 bis 9 auszuführen, wenn der Programmsatz durch mindestens einen Computer ausgeführt wird.

11. Vorrichtung (10) zum automatischen Generieren eines Geschwindigkeitsprofils eines Fahrzeugs (1), das auf einem zuvor festgelegten Pfad gefahren werden soll, wobei die Vorrichtung (10) umfasst:
- ein erstes Erfassungsmodul (11), das dazu ausgestaltet ist, einen ersten Satz von Daten zu erfassen, die für Umgebungsbedingungen an Wegpunkten entlang des zuvor festgelegten Pfades repräsentativ sind, wobei jede einzelne Umgebungsbedingung mit alternativen Geschwindigkeitsschwankungswerten verknüpft ist und jeder alternative Geschwindigkeitsschwankungswert mit einem Wahrscheinlichkeitswert verknüpft ist;
- ein zweites Erfassungsmodul (12), das dazu ausgestaltet ist, einen zweiten Satz von Daten zu erfassen, die für mindestens ein Fahrzeugattribut repräsentativ sind;
- ein Justierungsmodul (13), das dazu ausgestaltet ist, die alternativen Geschwindigkeitsschwankungswerte auf der Grundlage des mindestens einen Fahrzeugattributs zu justieren;
wobei die Vorrichtung (10) **dadurch gekennzeichnet ist, dass** sie umfasst:
- ein Auswahlmodul (14), das dazu ausgestaltet ist, für jeden Wegpunkt einen justierten Geschwindigkeitsschwankungswert aus den verknüpften alternativen Geschwindigkeitsschwankungswerten entsprechend den verknüpften Wahrscheinlichkeitswerten auszuwählen; und
- ein Generierungsmodul (15), das dazu ausgestaltet ist, das Geschwindigkeitsprofil des Fahrzeugs gemäß den ausgewählten Geschwindigkeitsschwankungswerten und ihren Wegpunkten zu generieren, und
wobei die Vorrichtung den Energieverbrauch des Fahrzeugs entlang des zuvor festgelegten Pfades auf der Grundlage des generierten Geschwindigkeitsprofils des Fahrzeugs bestimmt.

12. Vorrichtung (10) nach Anspruch 11, wobei sich mindestens eines der Module in einer Cloud befindet.

13. Fahrzeug (1), das eine Vorrichtung (10) nach Anspruch 12 umfasst.

## Revendications

1. Procédé mis en œuvre par ordinateur (20) pour générer automatiquement un profil de vitesse d'un véhicule (1) devant être conduit sur un trajet prédéterminé, le procédé comprenant les étapes suivantes :
- collecte d'un premier ensemble de données représentatives de conditions environnementales au niveau de points de passage le long du trajet prédéterminé (21), chaque condition environnementale distincte étant associée à des valeurs de fluctuation de vitesse alternatives et chaque valeur de fluctuation de vitesse alternative étant associée à une valeur de probabilité ;
- collecte d'un deuxième ensemble de données représentatives de au moins un attribut de véhicule (22) ;
- ajustement desdites valeurs de fluctuation de vitesse alternatives sur la base du au moins un attribut de véhicule (23) ;
le procédé mis en œuvre par ordinateur étant **caractérisé en ce qu'**il comprend :
- la sélection pour chaque point de passage d'une valeur de fluctuation de vitesse ajustée parmi les valeurs de fluctuation de vitesse alternatives associées en fonction des valeurs de probabilité associées (24) ;
- la génération du profil de vitesse du véhicule en fonction des valeurs de fluctuation de vitesse sélectionnées et de leurs points de passage (25) ; et
- la détermination de la consommation d'énergie du véhicule le long du trajet prédéterminé sur la base du profil de vitesse généré du véhicule.

2. Procédé mis en œuvre par ordinateur selon la revendication 1, selon lequel chaque valeur de fluctuation de vitesse d'un profil de vitesse devant être généré est également sélectionnée en fonction d'un profil de conducteur.

3. Procédé mis en œuvre par ordinateur selon la revendication 2, selon lequel le profil de conducteur est sélectionné parmi une pluralité de profils de conducteur alternatifs, chaque profil de conducteur alternatif étant associé à une plage distincte de valeurs de fluctuation de vitesse.

4. Procédé mis en œuvre par ordinateur selon la revendication 3, selon lequel les plages distinctes de valeurs de fluctuation de vitesse sont sélectionnées en fonction d'une distribution statistique de valeurs de fluctuation de vitesse.

5. Procédé mis en œuvre par ordinateur selon la revendication 4, selon lequel la distribution statistique de valeurs de fluctuation de vitesse est calculée à partir d'une étude statistique antérieure d'enregistrements de conduite.

6. Procédé mis en œuvre par ordinateur selon l'une quelconque des revendications 1 à 5, selon lequel le au moins un attribut de véhicule comprend le poids du véhicule et/ou le type du véhicule.

7. Procédé mis en œuvre par ordinateur selon l'une quelconque des revendications 1 à 5, selon lequel la condition environnementale comprend une condition de trafic et/ou une condition de géométrie du trajet devant être parcouru par le véhicule.

8. Procédé mis en œuvre par ordinateur selon la revendication 6, selon lequel la condition de trafic comprend un feu de signalisation et/ou un accident et/ou des panneaux de signalisation.

9. Procédé mis en œuvre par ordinateur selon la revendication 7 ou 8, selon lequel les valeurs de fluctuation de vitesse dues à une condition de géométrie sont calculées en fonction de modèles de régression.

10. Ensemble de programme informatique comprenant des instructions pour exécuter les étapes du procédé selon l'une quelconque des revendications 1 à 9 quand ledit ensemble de programme est exécuté par au moins un ordinateur.

11. Appareil (10) pour générer automatiquement un profil de vitesse d'un véhicule (1) devant être conduit sur un trajet prédéterminé, l'appareil (10) comprenant :
- un premier module de collecte (11) configuré pour collecter un premier ensemble de données représentatives de conditions environnementales au niveau de points de passage le long du trajet prédéterminé, chaque condition environnementale distincte étant associée à des valeurs de fluctuation de vitesse alternatives et chaque valeur de fluctuation de vitesse alternative étant associée à une valeur de probabilité ;
- un deuxième module de collecte (12) configuré pour collecter un deuxième ensemble de données représentatives de au moins un attribut de véhicule ;
- un module d'ajustement (13) configuré pour ajuster lesdites valeurs de fluctuation de vitesse alternatives sur la base du au moins un attribut de véhicule ;
l'appareil (10) étant **caractérisé en ce qu'**il comprend :
- un module de sélection (14) configuré pour sélectionner pour chaque point de passage une valeur de fluctuation de vitesse ajustée parmi les valeurs de fluctuation de vitesse alternatives associées en fonction des valeurs de probabilité associées ; et
- un module de génération (15) configuré pour générer le profil de vitesse du véhicule en fonction des valeurs de fluctuation de vitesse sélectionnées et de leurs points de passage, et
l'appareil détermine la consommation d'énergie du véhicule le long du trajet prédéterminé sur la base du profil de vitesse généré du véhicule.

12. Appareil (10) selon la revendication 11, dans lequel au moins un desdits modules se trouve dans un nuage.

13. Véhicule (1) comprenant un appareil (10) selon la revendication 12.
